# EUROPÄISCHE PATENTSCHRIFT

(11) **EP 1 993 873 B1**
(45) Veröffentlichungstag und Bekanntmachung des Hinweises auf die Patenterteilung: **25.04.2018**
(21) Anmeldenummer: 07722863.3
(22) Anmeldetag: 20.02.2007
(51) Int. Cl.: B60R 1/04

(54) **HALTEEINRICHTUNG FÜR EINEN INNENSPIEGEL EINES FAHRZEUGS**
HOLDING DEVICE FOR AN INTERIOR VEHICLE MIRROR
DISPOSITIF DE MAINTIEN POUR UN RÉTROVISEUR INTÉRIEUR D'UN VÉHICULE

(30) Priorität: 01.03.2006 DE 102006009318
(43) Veröffentlichungstag der Anmeldung: 26.11.2008
(73) Patentinhaber: Volkswagen Aktiengesellschaft, 38440 Wolfsburg (DE)
(72) Erfinder: KRAMPE, Andre, 38442 Wolfsburg (DE); KUTT, Joachim, 38114 Braunschweig (DE); WOLTMANN, Silvio, 09306 Erlau (DE)
(86) Internationale Anmeldenummer: PCT/EP2007/001441
(87) Internationale Veröffentlichungsnummer: WO 2007/101538

(56) Entgegenhaltungen:
- EP-A2- 0 928 723
- DE-A1- 10 060 447
- DE-A1- 10 127 070
- DE-A1- 10 211 444
- DE-A1- 10 256 835
- US-A1- 2002 113 203

## Beschreibung

Die vorliegende Erfindung betrifft eine Halteeinrichtung für einen Innenspiegel eines Fahrzeugs. Die Halteeinrichtung umfasst ein Befestigungsmittel zum Befestigen der Halteeinrichtung an einer Scheibe und eine erste Befestigungseinrichtung für einen Spiegelfuß des Innenspiegels. Ferner betrifft die Erfindung eine Halteanordnung zum Befestigen eines Innenspiegels eines Fahrzeugs an der Innenseite einer Windschutzscheibe. Die Anordnung umfasst die Halteeinrichtung und einen Innenspiegel, der mit seinem Spiegelfuß an der ersten Befestigungseinrichtung befestigt ist.

Es ist bekannt, den Innenspiegel eines Fahrzeugs mittels einer Halteplatte an der Innenseite der Windschutzscheibe zu befestigen. Dabei wird die Halteplatte an die Windschutzscheibe geklebt und der Spiegelfuß des Innenspiegels an der Halteplatte befestigt.

Es ist außerdem bekannt, im Spiegelfuß des Innenspiegels einen Regen/Licht-Sensor zu integrieren. Mit Hilfe dieses Sensors kann die Scheibenwischvorrichtung des Fahrzeugs automatisch gesteuert werden. Das Signal des Regen/Licht-Sensors kann außerdem zur Steuerung des Fahrlichts verwendet werden. Beispielsweise kann in Abhängigkeit von den detektierten Lichtverhältnissen das Abblendlicht und das entsprechende Schlusslicht des Fahrzeugs automatisch ein- und ausgeschaltet werden.

Aus der DE 102 11 444 A1 ist eine Halterung zum Befestigen wenigstens eines Bauteils an einer Glasscheibe, insbesondere eines Fahrzeugs, mit einer Unterseite, mit der die Halterung mittels einer Verklebung an die Glasscheibe anklebbar is, mit einer Oberseite, an der Halteelemente ausgebildet sind, mit denen das Bauteil oder die Bauteile an der Halterung befestigbar ist /sind, bekannt, wobei die Halterung aus mit Glasfasern verstärktem Kunststoff hergestellt ist.

Die EP 928 723 A2 beschreibt eine Regensensorbaugruppe zur Befestigung an einer Fahrzeugwindschutzscheibe, wobei die Regensensorbaugruppe ein Gehäuse für eine lösbare Befestigung an der Innenfläche der Windschutzscheibe und einen Regensensor mit einer Erfassungsfläche aufweist, wobei der genannte Regensensor in dem genannten Gehäuse enthalten ist und das genannte Gehäuse ein Spiegeleinbauelement zum lösbaren Anbringen einer Rückspiegelbaugruppe an dem Gehäuse aufweist.

Ferner ist es bekannt, außerhalb des Spiegelfußes an der Windschutzscheibe weitere Sensoren zu befestigen, die elektromagnetische Strahlung nach vorne durch die Windschutzscheibe emittieren bzw. detektieren. Diese Sensoren dienen z. B. Fahrerassistenzsystemen oder Komfortfunktionen für die Fahrzeuginsassen.

Die Sensoren sind zumeist im Bereich der Halterung des Fahrzeuginnenspiegels angeordnet, da sie hier zum einen die Sicht der Fahrzeuginsassen nicht stören und zum anderen relativ hoch angeordnet sind, was bei Sensoren mit einer möglichst großen Reichweite von Vorteil ist.

Bei der Anordnung der Sensoren ergibt sich jedoch das Problem, dass entweder die Vielzahl von Sensoren, die um den Spiegelfuß angeordnet sind, aus ästhetischer Sicht nachteilhaft sind oder dass bei einer Integration aller Sensoren im Spiegelfuß derselbe sehr groß wird. Die Integration aller Sensoren im Spiegelfuß kann außerdem zu Problemen bei der Erfüllung des sogenannten Kopfaufschlagkriteriums führen.

Es ist die Aufgabe der vorliegenden Erfindung, eine Halteeinrichtung und eine Halteanordnung der eingangs genannten Art bereitzustellen, mit denen sich zumindest ein Sensor auf ästhetisch ansprechende Weise im Bereich des Spiegelfußes befestigen lässt. Dabei sollte insbesondere auch den Erfordernissen an die Sicherheit der Insassen des Fahrzeugs bei einem Unfall Rechnung getragen werden. Die Halteeinrichtung bzw. die Halteanordnung sollte bei einem Kopfaufschlag eines Fahrzeuginsassen sowenig Verletzungen wie möglich hervorrufen.

Diese Aufgabe wird erfindungsgemäß durch eine Halteeinrichtung mit den Merkmalen des Anspruchs 1 und eine Halteanordnung mit den Merkmalen des Anspruchs 4 gelöst. Vorteilhafte Aus- und Weiterbildungen ergeben sich aus den Unteransprüchen.

Der Erfindung liegt die Idee zugrunde, bisherige Spiegelfußkonzepte zu ändern. Es wird davon Abstand genommen, den Spiegelfuß immer weiter zu vergrößern, um die gewünschten Sensoren zu integrieren. Vielmehr wird die Halteeinrichtung so ausgestaltet, dass die Sensoren dort befestigt werden können.

Die erfindungsgemäße Halteeinrichtung ist gekennzeichnet durch eine zweite Befestigungseinrichtung für zumindest einen Sensor und eine Abdeckung, welche zumindest die Befestigungsmittel zum Befestigen der Halteeinrichtung an der Scheibe und die zweite Befestigungseinrichtung in Richtung der Scheibe abdeckt wobei die zweite Befestigungseinrichtung einen Einstellmechanismus aufweist, durch den der Sensor einstellbar an der Halteeinrichtung befestigbar ist.

Die erfindungsgemäße Halteeinrichtung hat den Vorteil, dass der Sensor separat von dem Spiegelfuß an der Halteeinrichtung befestigt werden kann. Dies ist einerseits aus ästhetischer Sicht vorteilhaft. Zum anderen bietet diese Anordnung Vorteile hinsichtlich der Sicherheit der Fahrzeuginsassen: Bei einem etwaigen Aufschlag des Kopfes eines Fahrzeuginsassen gegen den Innenspiegel wird dieser gemeinsam mit dem Spiegelfuß abgeschert. Die Sensoren verbleiben jedoch an der Halteeinrichtung und sind von der Abdeckung abgedeckt. Die Abdeckung kann somit unabhängig von der Form des Spiegelfußes so gestaltet werden, dass das Verletzungsrisiko für die Fahrzeuginsassen minimiert wird. Des Weiteren lassen sich durch die Verlagerung der Sensoren von dem Inneren des Spiegelfußes zu der Halteeinrichtung mehr Sensoren in dem Bereich der Windschutzscheibe unterbringen, in dem sich der Innenspiegel befindet. Dieser Bereich ist für Sensoren besonders vorteilhaft, da sich der Innenspiegel üblicherweise auf der Mittelachse des Fahrzeugs befindet.

Gemäß einer bevorzugten Ausgestaltung der erfindungsgemäßen Halteeinrichtung weist die Abdeckung eine Aussparung zur Aufnahme eines an der ersten Befestigungseinrichtung befestigten Spiegelfußes des Innenspiegels auf. Gemäß einer anderen Ausgestaltung ist die Abdeckung mehrteilig ausgebildet und deckt ferner den Spiegelfuß ab.

Die Kanten der Abdeckung sind vorzugsweise so ausgebildet, dass sie das sogenannte Kopfaufschlagkriterium erfüllen. Dies bedeutet, dass kein Radius der Abdeckung kleiner als 2,2 mm ist.

Die erfindungsgemäße Halteanordnung umfasst die vorstehend beschriebene Halteeinrichtung. Ferner umfasst die Halteanordnung einen Innenspiegel, der mit seinem Spiegelfuß an der ersten Befestigungseinrichtung befestigt ist, und zumindest einen Sensor, der an der zweiten Befestigungseinrichtung befestigt ist. Der Rand der Abdeckung schließt bei der erfindungsgemäßen Halteanordnung an der Innenseite der Windschutzscheibe ab.
Die Mittel zur Befestigung der Halteeinrichtung können insbesondere von einer Halteplatte mit einer klebenden Oberfläche gebildet sein, die der Form der Oberfläche der Windschutzscheibe folgt.

Die Halteplatte kann eine oder mehrere Aussparungen zum Durchtritt elektromagnetischer Strahlung des Sensor oder der Sensoren durch die Windschutzscheibe aufweisen. Falls der Sensor oder die Sensoren nur elektromagnetische Strahlung detektieren, dienen die Aussparungen auf gleiche Weise zum Durchtritt elektromagnetischer Strahlung zum Sensor hin.

Bei dem Sensor handelt es sich insbesondere um einen optischen Abstandsmesser mit einemStrahler für elektromagnetische Strahlung. Derartige Sensoren sind auch unter der Bezeichnung LIDAR (light detection and ranging)-Sensoren bekannt. Erfindungsgemäß wird insbesondere ein solcher LIDAR-Sensor mittels der zweiten Befestigungseinrichtung an der Halteeinrichtung befestigt.

Bei der erfindungsgemäßen Halteanordnung kann der Sensor oder können die Sensoren außerhalb des Spiegelfußes an der Halteeinrichtung befestigt sein. Ferner kann zumindest ein Sensor zwischen der Scheibe und der ersten Befestigungseinrichtung für den Spiegelfuß angeordnet sein. Dieser Sensor befindet sich dann auf der Mittelachse des Fahrzeugs, was für viele Anwendungen von Vorteil ist.

Die Erfindung wird nun anhand von Ausführungsbeispielen mit Bezug zu den Zeichnungen erläutert.
- Fig. 1: zeigt ein erstes Ausführungsbeispiel der erfindungsgemäßen Halteanordnung,
- Fig. 2: zeigt das erste Ausführungsbeispiel bei einer perspektivischen Ansicht mit Abdeckung,
- Fig. 3: zeigt eine Seitenansicht des ersten Ausführungsbeispiels mit aufgesetzter Abdeckung und befestigtem Innenspiegel,
- Fig. 4: zeigt die Halteeinrichtung ohne Abdeckung eines zweiten Ausführungsbeispiels,
- Fig. 5: zeigt das zweite Ausführungsbeispiel mit Abdeckung und
- Fig. 6: zeigt das zweite Ausführungsbeispiel mit befestigtem Spiegelfuß.

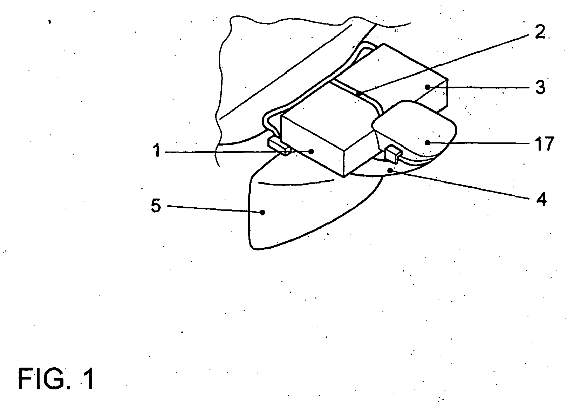

Mit Bezug zu den Fig. 1 bis 3 wird zunächst ein erstes Ausführungsbeispiel der Erfindung erläutert:

Die Halteanordnung umfasst eine Halteeinrichtung 3, welche eine Oberfläche umfasst, welche sich an die Innenseite der Windschutzscheibe eines Kraftfahrzeugs ankleben lässt. An der Halteeinrichtung 3 ist ein optischer Sensor 1 so befestigt, dass der Sensor 1 an der Mit dem Sensor 1 lässt sich der Abstand, die Geschwindigkeit und die Richtung eines sich dem Fahrzeug nähernden Objekts ermitteln. Hierfür sendet der Sensor 1 codiertes Laserlicht aus, das von Hindernissen im Erfassungsbereich des Sensors 1 reflektiert wird. Ein Decoder des Sensors 1 ermittelt dann die Zeit zwischen ausgesendetem und rückkehrendem Lasersignal. Der Sensor 1 umfasst zum Emittieren der Laserlichtimpulse eine Laserdiode, die im Infrarotbereich Lichtimpulse emittiert und detektiert. Der Frequenzbereich der Lichtimpulse liegt insbesondere bei etwa 910 nm. Der Erfassungsbereich des Sensors 1 ist beispielsweise kegelförmig mit einem Öffnungswinkel von etwa 8°.

Der LIDAR-Sensor 1 wird durch Verclipsen oder Verschrauben an der Halteeinrichtung befestigt. Optional könnte auch ein Einstellmechanismus in die Halteeinrichtung eingebracht sein, die eine Veränderung der Sensorposition ermöglichen würde.

Der als so genannte dritte Sonnenblende genutzte Schwarzdruck (Punktraster) auf der Windschutzscheibe wird in den Bereichen der Sensorsichtfelder ebenfalls angepasst. Statt des Schwarzdruckes kann auf dem Sensor 1 oder alternativ in der Windschutzscheibe eine Tönungsfolie eingebracht sein, damit der Sensor 1 für den Betrachter außerhalb des Fahrzeugs nicht sichtbar ist.

In der Halteeinrichtung 3 ist eine Nut ausgebildet, welche ein Kabel 2 aufnimmt, welches den Sensor 1 mit weiteren elektronischen Komponenten, insbesondere den zugehörigen Fahrerassistenzsystemen, verbindet.

Die Halteeinrichtung 3 weist ferner eine Befestigungseinrichtung für den Spiegelfuß 4 eines Innenspiegels 5 auf. Bei dem ersten Ausführungsbeispiel ist ein weiterer Sensor 17 zwischen der Befestigungseinrichtung für den Spiegelfuß 4 und der Windschutzscheibe befestigt. Der Innenspiegel 5 ist über das Kugelgelenk 8 mit dem Spiegelfuß 4 verbunden.

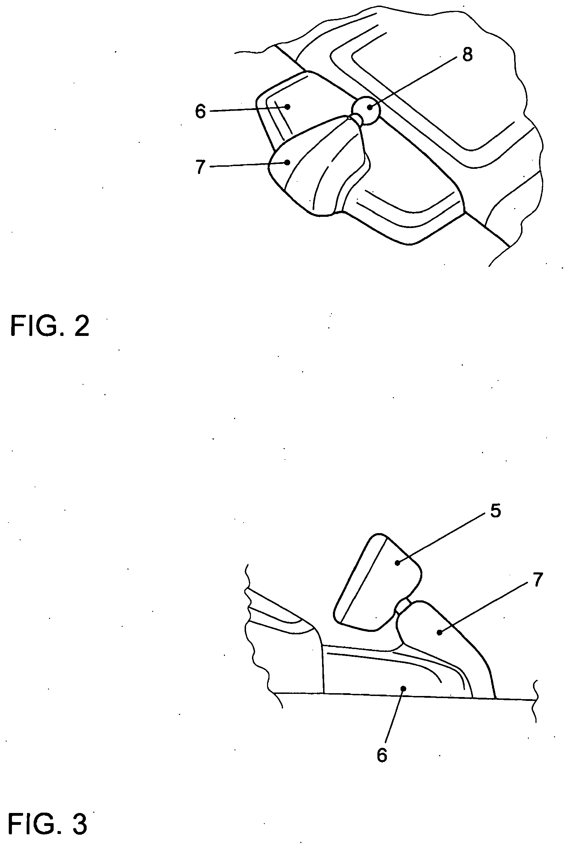

Wie am Besten aus Fig. 2 ersichtlich, wird die Halteeinrichtung 3 und die Befestigungseinrichtung für den Sensor 1 von der mehrteiligen Abdeckung 6, 7 gegenüber der Windschutzscheibe abgedeckt. Dies bedeutet, dass bei einer Ansicht von innen auf die Windschutzscheibe nur die mehrteilige Abdeckung 6, 7 und der Innenspiegel 5 sichtbar sind. Unter dem Teil 6 der Abdeckung können noch weitere Sensoren an der Halteeinrichtung 3 befestigt werden. Die Abdeckung 6, 7 wird optisch in das Fahrzeuginterieur integriert. Der Rand der Abdeckung 6, 7 liegt formschlüssig an der Windschutzscheibe an.

Bei einem etwaigen Kopfaufschlag auf den Innenspiegel 5 löst sich der Innenspiegel 5, der Spiegelfuß 4 mit dem Teil 7 der Abdeckung von der Halteeinrichtung 3. Die Abdeckung 6, 7 ist so ausgebildet, dass sowohl beim bestimmungsgemäßen, in den Figuren gezeigten Verbau als auch nach dem Abscheren des Innenspiegels 5 mit dem Spiegelfuß 4 und dem Abdeckteil 7 die Mindestradien auch bei den an der Windschutzscheibe verbleibenden Teilen über dem Sensor 1 so groß sind, dass das Verletzungsrisiko für die Fahrzeuginsassen minimiert wird. Gemäß den derzeitigen Bestimmungen sind die Radien größer 2,2 mm.

Die Halteeinrichtung 3 weist außerdem einen Kanal auf, in dem die Leitungen 2 zum Regen/Licht-Sensor und zum Elektrochrom (EC)-Spiegel verlaufen.

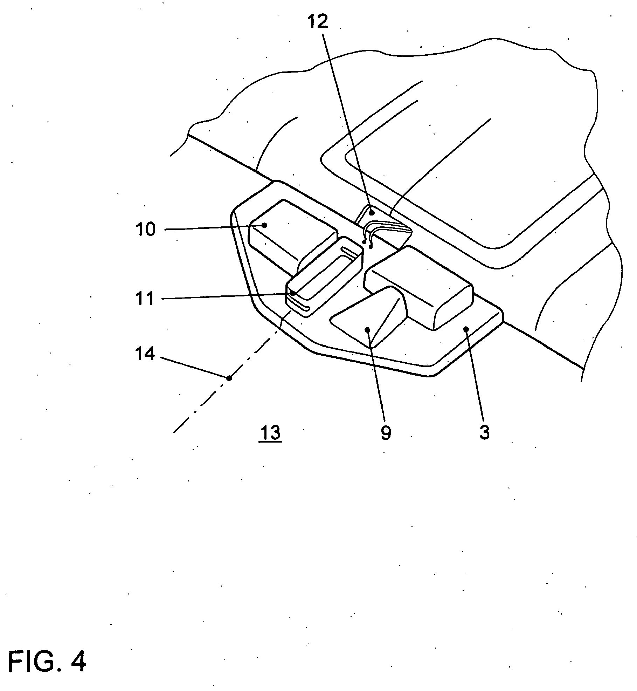

Mit Bezug zu den Fig. 4 bis 6 wird ein zweites Ausführungsbeispiel beschrieben:

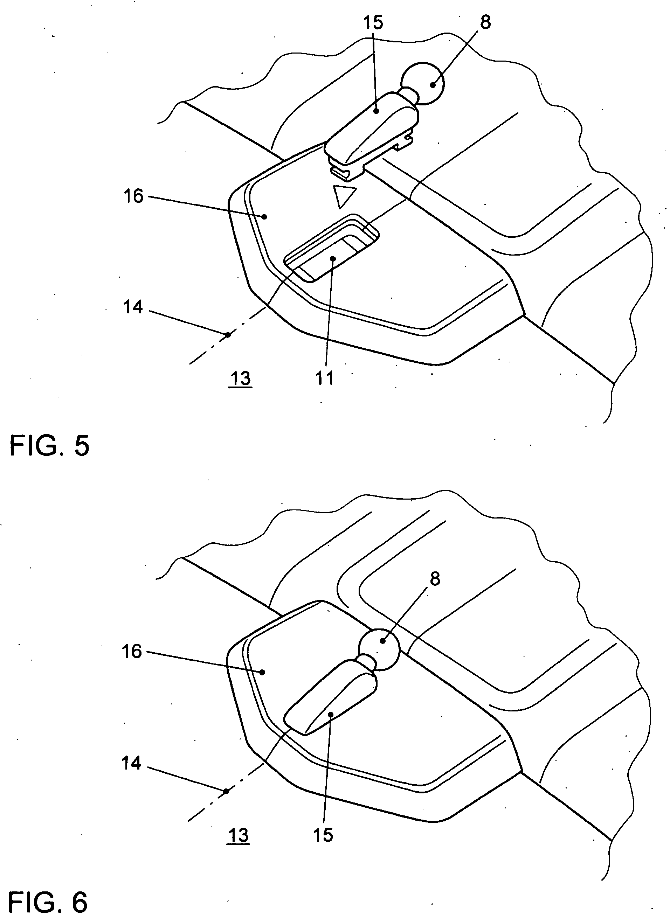

Wie es am Besten in Fig. 4 erkennbar ist, umfasst die Halteeinrichtung 3 eine Platte, die mit einer Seite auf die Windschutzscheibe 13 geklebt ist. Auf der anderen Seite der Platte der Halteeinrichtung 3 befinden sich Befestigungseinrichtungen für Sensoren. In der Mitte der Halteeinrichtung 3 auf der Mittelachse 14 des Fahrzeugs befindet sich eine Aufnahme 11 für den Spiegelfuß 15 eines Innenspiegels. Der Spiegelfuß 15 kann in der Aufnahme 11 verrastet werden (Fig. 5 und 6).

Der Spiegelfuß 15 kann relativ schmal ausgebildet sein, da es nicht mehr erforderlich ist, Sensoren in ihm zu integrieren. Der Spiegelfuß 15 kann aus Kunststoff gefertigt sein. Dabei kann eine zweiteilige Ausbildung gewählt werden, damit die Möglichkeit zur Kabelführung besteht. Falls es aus Stabilitätsgründen erforderlich sein sollte, kann der Spiegelfuß 15 auch aus Metall ausgeführt sein. In diesem Fall wäre die Oberfläche lackiert.

Neben der Aufnahme 11 für den Spiegelfuß 15 sind weitere Sensoren 9 und 10 auf der der Windschutzscheibe abgewandten Seite der Halteeinrichtung 3 befestigt. Die Sensoren 9 und 10 können Infrarot- und Lasersensoren sowie Kameras, insbesondere einen LIDAR-Sensor, umfassen. Sie dienen Fahrerassistenzsystemen und Komfortfunktionen, wie z. B. einer Abstandsregelung, die ggf. in Verbindung mit einem Tempomat eingesetzt wird, einem Spurhalterassistent, einer Scheibenwischerautomatik, einem Tunnellicht und einer Antibeschlagfunktion der Klimaanlage.

Im Bereich der Sensoren 9 und 10 weist die Halteplatte 3 eine Öffnung auf, so dass die Sensoren 9 und 10 elektromagnetische Strahlung nach außen emittieren und von außen detektieren können. Um die Sicht im Fahrbetrieb auch bei Verschmutzung der Windschutzscheibe zu gewährleisten, wird die Halteeinrichtung 3 in dem Bereich positioniert, der von dem Scheibenwischer überwischt wird. Dabei darf die Halteanordnung jedoch nicht die Sicht des Fahrers beeinträchtigen:

Über der Halteeinrichtung 3 wird eine Abdeckung 16 platziert, welche die Halteeinrichtung 3 und die darauf befestigten Sensoren 9 und 10 abdeckt. Die Abdeckung 16 weist eine Aus-sparung auf, damit der Spiegelfuß 15 in die Aufnahme 11 einrasten kann. Der zusammengebaute Zustand der Halteanordnung ist in Fig. 6 gezeigt. Der Innenspiegel ist jedoch noch nicht über das Kugelgelenk 8 an dem Spiegelfuß 15 befestigt.

Die Verrastung des Spiegelfußes 15 in der Aufnahme 11 ist so ausgebildet, dass sich bei einem etwaigen Kopfaufschlag der Innenspiegel mit dem Spiegelfuß 15 von der Halteanordnung 3 löst, so dass die Halteeinrichtung 3 mit den Sensoren 9 und 10 an der Windschutzscheibe 13 verbleibt. Auch bei diesem Ausführungsbeispiel sind die Kanten der Abdeckung 16 und des Spiegelfußes 15 so ausgebildet, dass das Kopfaufschlagkriterium erfüllt wird, d.h. der Kantenradius ist größer 2,2 mm.

Die Halteanordnung wird wie folgt an der Windschutzscheibe 13 befestigt: Zunächst wird die Halteeinrichtung 3 in dem Bereich der Windschutzscheibe 13 aufgeklebt, der an dem Dachhimmel angrenzt. Danach werden die Sensoren 9 und 10 an der Halteeinrichtung 3 befestigt und ggf. Kabel durch eine Öffnung 12 in den Dachhimmel geführt. Daraufhin wird die Abdeckung 16 so an der Halteeinrichtung 3 befestigt, dass der Rand an der Windschutzscheibe 13 anliegt und die Halteeinrichtung 3 mit den darauf befindlichen Sensoren 9 und 10 vollständig zur Windschutzscheibe 13 hin abgedeckt sind. Schließlich wird der Spiegelfuß 15 mit dem Spiegel in der Aufnahme 11 befestigt. Der Spiegelfuß 15 ist dabei so gestaltet, dass er ohne große Fugen an der Abdeckung 16 anliegt. Auf diese Weise kann er von der Abdeckung 16 zusätzlich seitlich stabilisiert werden, wobei er jedoch bei einem etwaigen Kopfaufschlag abscheren kann. Die Montagerichtung senkrecht zur Windschutzscheibe 13 bietet den Vorteil, dass ein weiterer Sensor auf der Mittelachse 14 zwischen dem Spiegelfuß 15 bzw. der Aufnahme 11 und der Windschutzscheibe 13 platziert werden kann.

### Bezugszeichenliste

- 1: LIDAR-Sensor
- 2: Kabel für den Regen/Licht-Sensor
- 3: Halteeinrichtung
- 4: Spiegelfuß
- 5: Innenspiegel
- 6: Erster Teil einer mehrteiligen Abdeckung
- 7: Zweiter Teil einer mehrteiligen Abdeckung
- 8: Kugelgelenk für den Innenspiegel
- 9: Sensor
- 10: Sensor
- 11: Aufnahme für einen Spiegelfuß
- 12: Öffnung im Dachhimmel
- 13: Windschutzscheibe
- 14: Mittelachse des Fahrzeugs
- 15: Spiegelfuß
- 16: Abdeckung
- 17: Regen/Licht-Sensor

## Patentansprüche

1. Halteeinrichtung (3) für einen Innenspiegel (5) eines Fahrzeugs umfassend:
- Befestigungsmittel zum Befestigen der Halteeinrichtung (3) an einer Scheibe (13) und
- eine erste Befestigungseinrichtung (11) für einen Spiegelfuß (4; 15) des Innenspiegels (5),
- eine zweite Befestigungseinrichtung für zumindest einen Sensor (1; 9, 10) und
- eine Abdeckung (6, 7; 16), welche zumindest die Befestigungsmittel und die zweite Befestigungseinrichtung in Richtung der Scheibe (13) abdeckt,
- **dadurch gekennzeichnet, dass**
- die zweite Befestigungseinrichtung einen Einstellmechanismus aufweist, durch den der Sensor (1; 9, 10) einstellbar an der Halteeinrichtung (3) befestigbar ist.

2. Halteeinrichtung (3) nach Anspruch 1, **dadurch gekennzeichnet, dass** die Abdeckung (16) eine Aussparung zur Aufnahme eines an der ersten Befestigungseinrichtung (11) befestigten Spiegelfußes (15) des Innenspiegels aufweist.

3. Halteeinrichtung (3) nach Anspruch 1, **dadurch gekennzeichnet, dass** die Abdeckung (6, 7) mehrteilig ausgebildet ist und ferner den Spiegelfuß (4) abdeckt.

4. Halteanordnung zum Befestigen eines Innenspiegels (5) eines Fahrzeugs an der Innenseite einer Windschutzscheibe (13) umfassend:
- eine Halteeinrichtung (3) nach einem der Ansprüche 1 bis 3,
- einen Innenspiegel (5) der mit seinem Spiegelfuß (4; 15) an der ersten Befestigungseinrichtung (11) befestigt ist, und
- zumindest einen Sensor (1; 9, 10), der an der zweiten Befestigungseinrichtung befestigt ist,
- wobei ein Rand der Abdeckung (6, 7; 16) an der Innenseite der Windschutzscheibe (13) abschließt.

5. Halteanordnung nach Anspruch 4, **dadurch gekennzeichnet, dass** die Mittel zum Befestigen der Halteeinrichtung (3) von einer Halteplatte mit einer klebenden Oberfläche gebildet sind, die der Form der Oberfläche der Windschutzscheibe (13) folgt.

6. Halteanordnung nach Anspruch 5, **dadurch gekennzeichnet, dass** die Halteplatte eine oder mehrere Aussparung(en) zum Durchtritt elektromagnetischer Strahlung zu oder von dem Sensor oder den Sensoren durch die Windschutzscheibe (13) aufweist.

7. Halteanordnung nach einem der Ansprüche 4 bis 6, **dadurch gekennzeichnet, dass** der Sensor (1; 9, 10) ein optischer Abstandssensor mit einem Strahler für elektromagnetische Strahlung ist.

8. Halteanordnung nach einem der Ansprüche 4 bis 7, **dadurch gekennzeichnet, dass** der Sensor (1; 9, 10) oder die Sensoren außerhalb des Spiegelfußes (4; 15) an der Halteeinrichtung (3) befestigt sind.

9. Halteanordnung nach einem der Ansprüche 4 bis 8, **dadurch gekennzeichnet, dass** zumindest ein Sensor (17) zwischen der Scheibe und der ersten Befestigungseinrichtung für den Spiegelfuß (4) angeordnet ist.

10. Halteanordnung nach Anspruch 9, **dadurch gekennzeichnet, dass** der zumindest eine Sensor (17) zwischen der Scheibe und der ersten Befestigungseinrichtung für den Spiegelfuß (4) auf der Mittelachse des Fahrzeugs angeordnet ist.

## Claims

1. Holding device (3) for an interior mirror (5) of a vehicle, comprising:
- attachment means for attaching the holding device (3) to a window pane (13), and
- a first attachment device (11) for a mirror foot (4; 15) of the interior mirror (5),
- a second attachment means for at least one sensor (1; 9, 10) and
- a cover (6, 7; 16) which covers at least the attachment means and the second attachment device in the direction of the window pane (13),
- **characterized in that**
- the second attachment device has an adjustment mechanism by which the sensor (1; 9, 10) can be attached in an adjustable fashion to the holding device (3).

2. Holding device (3) according to Claim 1, **characterized in that** the cover (16) has a cutout for receiving a mirror foot (15), attached to the first attachment device (11), of the interior mirror.

3. Holding device (3) according to Claim 1, **characterized in that** the cover (6, 7) is embodied in multiple parts and also covers the mirror foot (4) .

4. Holding assembly for attaching an interior mirror (5) of a vehicle to the inside of a windscreen (13), comprising:
- a holding device (3) according to one of Claims 1 to 3,
- an interior mirror (5) which is attached by its mirror foot (4; 15) to the first attachment device (11), and
- at least one sensor (1; 9, 10) which is attached to the second attachment device,
- wherein one edge of the cover (6, 7; 16) terminates flush with the inside of the windscreen (13) .

5. Holding assembly according to Claim 4, **characterized in that** the means for attaching the holding device (3) are formed by a holding plate with an adhesive surface, which follows the shape at the surface of the windscreen (13).

6. Holding assembly according to Claim 5, **characterized in that** the holding plate has one or more cutouts for electromagnetic radiation to pass through to or from the sensor or the sensors through the windscreen (13).

7. Holding assembly according to one of Claims 4 to 6, **characterized in that** the sensor (1; 9, 10) is an optical distance sensor with a radiator for electromagnetic radiation.

8. Holding assembly according to one of Claims 4 to 7, **characterized in that** the sensor (1; 9, 10) or the sensors is/are attached to the holding device (3) outside the mirror foot (4; 15).

9. Holding assembly according to one Claims 4 to 8, **characterized in that** at least one sensor (17) is arranged between the window pane and the first attachment device for the mirror foot (4).

10. Holding assembly according to Claim 9, **characterized in that** the at least one sensor (17) is arranged between the window pane and the first attachment device for the mirror foot (4), on the centre axis of the vehicle.

## Revendications

1. Dispositif de maintien (3) pour un rétroviseur intérieur (5) d'un véhicule, comprenant :
- un moyen de fixation pour fixer le dispositif de maintien (3) à un pare-brise (13) et
- un premier dispositif de fixation (11) pour une base de rétroviseur (4 ; 15) du rétroviseur intérieur (5),
- un deuxième dispositif de fixation pour au moins un capteur (1 ; 9, 10) et
- un recouvrement (6, 7 ; 16) qui recouvre au moins les moyens de fixation et le deuxième dispositif de fixation dans la direction du pare-brise (13),
- **caractérisé en ce que**
- le deuxième dispositif de fixation présente un mécanisme d'ajustement par le biais duquel le capteur (1 ; 9, 10) peut être fixé de manière ajustable au dispositif de maintien (3).

2. Dispositif de maintien (3) selon la revendication 1, **caractérisé en ce que** le recouvrement (16) présente un évidement pour recevoir une base de rétroviseur (15) du rétroviseur intérieur fixée au premier dispositif de fixation (11).

3. Dispositif de maintien (3) selon la revendication 1, **caractérisé en ce que** le recouvrement (6, 7) est réalisé en plusieurs parties et recouvre en outre la base de rétroviseur (4).

4. Agencement de maintien pour fixer un rétroviseur intérieur (5) d'un véhicule au côté intérieur d'un pare-brise (13), comprenant :
- un dispositif de maintien (3) selon l'une quelconque des revendications 1 à 3,
- un rétroviseur intérieur (5) qui est fixé par sa base de rétroviseur (4 ; 15) au premier dispositif de fixation (11), et
- au moins un capteur (1 ; 9, 10) qui est fixé au deuxième dispositif de fixation,
- un bord de recouvrement (6, 7 ; 16) se terminant au niveau du côté intérieur du pare-brise (13).

5. Agencement de maintien selon la revendication 4, **caractérisé en ce que** les moyens pour la fixation du dispositif de maintien (3) sont formés par une plaque de maintien avec une surface adhésive qui suit la forme de la surface du pare-brise (13).

6. Agencement de maintien selon la revendication 5, **caractérisé en ce que** la plaque de maintien présente un ou plusieurs évidements pour le passage de rayonnements électromagnétiques vers ou depuis le capteur ou les capteurs à travers le pare-brise (13).

7. Agencement de maintien selon l'une quelconque des revendications 4 à 6, **caractérisé en ce que** le capteur (1 ; 9, 10) est un capteur de distance optique avec un émetteur de rayonnements électromagnétiques.

8. Agencement de maintien selon l'une quelconque des revendications 4 à 7, **caractérisé en ce que** le capteur (1 ; 9, 10) ou les capteurs sont fixés à l'extérieur de la base de rétroviseur (4 ; 15) sur le dispositif de maintien (3).

9. Agencement de maintien selon l'une quelconque des revendications 4 à 8, **caractérisé en ce qu'**au moins un capteur (17) est disposé entre le pare-brise et le premier dispositif de fixation pour la base de rétroviseur (4).

10. Agencement de maintien selon la revendication 9, **caractérisé en ce que** l'au moins un capteur (17) est disposé entre le pare-brise et le premier dispositif de fixation pour la base de rétroviseur (4) sur l'axe médian du véhicule.
